# FASCICULE DE BREVET EUROPEEN

(11) **EP 3 126 588 B1**
(45) Date de publication et mention de la délivrance du brevet: **26.02.2020**
(21) Numéro de dépôt: 15714498.1
(22) Date de dépôt: 02.04.2015
(51) Int. Cl.: E04C 1/41, C04B 38/10, C04B 41/00, C04B 111/00, C04B 111/10

(54) **PROCEDE DE FABRICATION D'UN BLOC DE CONSTRUCTION COMPOSITE ISOLANT**
VERFAHREN ZUR HERSTELLUNG EINES ISOLIERENDEN VERBUNDBAUSTEINS
METHOD FOR PRODUCING AN INSULATING COMPOSITE BUILDING BLOCK

(30) Priorité: 02.04.2014 FR 1452919
(43) Date de publication de la demande: 08.02.2017
(73) Titulaire: Holcim Technology Ltd, 8645 Jona (CH)
(72) Inventeur: LOMBOIS-BURGER, Hélène, F-38291 Saint Quentin Fallavier (FR); ROY, Cédric, F-38291 Saint Quentin Fallavier (FR); LEVY, Christophe, F-38291 Saint Quentin Fallavier (FR)
(74) Mandataire: Regimbeau
(86) Numéro de dépôt international: PCT/EP2015/057388
(87) Numéro de publication internationale: WO 2015/150550

(56) Documents cités:
- EP-A1- 0 086 974
- EP-A1- 1 174 558
- WO-A1-2013/150148
- DE-U1- 29 722 863
- FR-A1- 2 374 393
- Liapor: "New Generation of Products featuring mineral insulating material", , 31 décembre 2013 (2013-12-31), XP002731482, Extrait de l'Internet: URL:http://www.liapor.com/en/fines.php?n=0 102 [extrait le 2014-10-22]

## Description

La présente invention concerne un procédé de fabrication d'un élément de maçonnerie, ou d'un bloc à maçonner, en particulier d'un bloc de construction isolant composite, et l'élément ou le bloc obtenu par ledit procédé.

Les blocs de béton nus sont des éléments de construction très répandus, le matériau étant à l'achat l'un des plus économiques. Ses propriétés d'isolation thermique demeurent cependant limitées. Pour améliorer ses propriétés thermiques, les blocs de béton peuvent être allégés par allègement du béton. Par ailleurs, ils peuvent être moulés de manière à comprendre des alvéoles ou espaces vides internes de manière à bénéficier des propriétés isolantes de l'air. Dans ce cas les alvéoles doivent être de petites dimensions, par exemple des alvéoles de forme allongée dont l'épaisseur ne dépasse pas 2 cm. De tels blocs sont cependant plus difficiles à fabriquer et utilisent une plus grande quantité de matière première.

Des matériaux isolants ont été disposés à l'intérieur des alvéoles de blocs de béton léger pour améliorer la résistance thermique de ces blocs de construction, créant ainsi des blocs isolants composites. Ainsi il est connu d'introduire de la laine minérale, de laine de verre ou du polystyrène à l'intérieur de parpaings de béton léger. Le procédé de fabrication est cependant peu économique et/ou complexe. Plus récemment il a été proposé de remplir les alvéoles de mousses de ciment car les mousses de ciment ont des propriétés thermiques d'isolation intéressantes.

Cependant le remplissage de cavités présentes dans des blocs de béton léger par des mousses de ciment nécessite des mousses à prises rapides telles des mousses de ciment d'aluminate de calcium. Lorsque des mousses à prise lente, sont utilisées et introduites sous forme de mousse, la mousse à tendance à s'effondrer, à se déstabiliser, à se rétracter lors de son durcissement et à se détacher de la paroi des cavités. Un tel phénomène se fait, évidemment, au détriment des propriétés thermiques de tels blocs composites.

Les mousses à prise rapide, en particulier les mousses à base de ciment d"aluminate de calcium, sont économiquement peu intéressantes et difficiles d'utilisation dans un procédé industriel du fait même de leur prise rapide (phénomène d'encrassage).

L'invention a pour but de remédier à ces inconvénients en fournissant un procédé de fabrication d'un bloc minéral isolant composite comprenant es étapes suivantes :
a) disposer d'un bloc minéral à maçonner comprenant au moins une alvéole ayant des parois présentant un taux d'absorption d'eau de moins de 5 g / (m².s) à 10 minutes, et
b) remplir ladite alvéole d'une mousse minérale de ciment ne comprenant substantiellement pas de ciment d'aluminate de calcium.

De préférence la mousse minérale de ciment ne comprend substantiellement pas de ciment à prise rapide. De préférence les parois de l'alvéole du bloc minéral à maçonner, peuvent être une paroi unique (par exemple circulaire).

Avantageusement le procédé selon l'invention permet le remplissage en continu ou en semi continu des alvéoles du bloc minéral à maçonner par la mousse minérale de ciment. Ceci est particulièrement bien adapté à la fabrication en usine sur une ligne de production, où les blocs sont produits en continu ou en semi continu.

Avantageusement, le procédé selon l'invention permet de conserver une stabilité de la mousse dans le bloc minéral à maçonner, c'est-à-dire que la mousse ne s'effondre pas.

Avantageusement, le procédé selon l'invention permet de remplir complètement l'alvéole du bloc avec peu ou pas de déformations à la surface de la mousse, notamment peu ou pas de déformations concaves.

Avantageusement, le procédé selon l'invention permet d'obtenir un bloc minéral isolant composite dont la mousse minérale de ciment adhère durablement aux parois de l'alvéole du bloc. En effet cette mousse minérale de remplissage ne se détache pas des parois dans des conditions d'utilisations usuelles, même lorsque le bloc est retourné et secoué. Le procédé selon l'invention permet de maintenir une cohésion du bloc et de la mousse. Cela signifie que la mousse ne se déstabilise pas.

L'expression « substantiellement pas» désigne une composition qui n'inclut pas une quantité suffisante de composé pour que sa présence ait des effets réels sur la prise de la mousse. Ainsi la présence d'une quantité inférieure à environs 5% en masse du mélange sec, ou de traces de ce composé n'affectera pas sensiblement la prise de la mousse et une telle quantité peut donc se trouver dans la composition sans que celle-ci comprenne effectivement ce composé.

### Définitions :

Alvéole : un creux, une cavité, un espace vide ou une excavation présente à la surface ou à l'intérieur du bloc. Il s'agit d'un vide structurel. Cette alvéole possède des parois, destinées à venir en contact avec la mousse minérale de ciment.

Brique : La brique est un parallélépipède rectangle, de terre argileuse crue et séchée au soleil ou cuite au four, utilisé comme matériau de construction. L'argile est souvent mêlée à du sable. La brique présente une ou des alvéoles.

Le terme « composite » décrit l'association d'un bloc de construction comprenant un ou plusieurs vides structurels, de préférence traversants, dont au moins un, et de préférence tous, sont remplis d'un matériau minéral dont la structure ou la composition est différente de celle dudit bloc.

Béton : un mélange d'un ciment, avec de l'eau, éventuellement des granulats et/ou des adjuvants conformément à la norme EN 934-2 de septembre 2002, et éventuellement des additions. L'expression « béton », désigne indistinctement une composition à l'état frais ou durci. Le béton peut être un coulis de ciment, un mortier, un béton ou un coulis de chaux. Préférentiellement, le béton est un mortier ou un béton.

Béton léger : Les bétons légers sont obtenus en jouant sur la structure (bétons caverneux) ou sur l'emploi de granulats allégés (tels que des granulats de pierre ponce, des billes de schiste expansé, d'argile expansée ou de polystyrène, voire des particules de liège ou de bois). Des adjuvants comme les entraîneurs d'air peuvent aussi être ajoutés pour un allègement maximum. On peut également créer une porosité par une réaction provoquant un dégagement gazeux : c'est le cas du béton cellulaire ou d'un béton mousse. Les bétons légers des blocs selon l'invention offrent une densité très inférieure à celle d'un produit classique, ces densités étant de 300 à 1800 kg/m³.

Ciment : Un ciment est un liant hydraulique comprenant une proportion au moins égale à 50% en masse d'oxyde de calcium (CaO) et de dioxyde de silicium (SiO2). Ces quantités étant déterminées par la norme EN 196-2 d'avril 2006. Les ciments pouvant être utilisés pour réaliser soit les mousses minérales, soit les blocs à alvéole(s), peuvent être sélectionnés parmi les ciments décrits dans la norme NF-EN197-1 de février 2001, en particulier être des ciments CEM I, CEM II, CEM III, CEM IV, ou CEM V. Avantageusement le ciment comprend en majorité du ciment de Portland, tel que du CEM I.

Les ciments ne convenant pas selon l'invention pour réaliser la mousse minérale sont les ciments d'aluminates de calcium ou leurs mélanges. Les ciments d'aluminates de calcium sont des ciments généralement comprenant une phase minéralogique C₄A₃$, CA, C₁₂A₇, C₃A ou C₁₁A₇CaF₂ ou leurs mélanges, tel que par exemple les Ciments Fondu®, les ciments sulfoalumineux, les ciments d'aluminates de calcium conformes à la norme européenne NF EN 14647 de décembre 2006. De tels ciments sont caractérisés par une teneur en alumine (Al₂O₃) supérieure ou égale à 35% en masse.

Ainsi pour la réalisation du procédé selon l'invention la teneur en alumine du composé minéral sec utilisé pour réaliser la mousse est inférieure ou égale à 20%, avantageusement inférieure ou égale à 15 %, et encore plus avantageusement inférieure ou égale à 10%, en masse du composé sec.

Liant hydraulique : Matériau qui prend et durcit par hydratation. La prise est le passage de l'état liquide ou pâteux à l'état solide. La prise est suivie ou accompagnée d'un phénomène de durcissement où le matériau acquière des propriétés mécaniques. Le durcissement a généralement lieu après la fin de la prise, particulièrement pour les ciments.

Laitier: par exemple tels que définis dans la norme NF EN 197-1 de février 2001, paragraphe 5.2.2, ou il s'agit un coproduit de la métallurgie contenant des oxydes métalliques, essentiellement des silicates, des aluminates et de la chaux.

L'expression « mousse minérale » désigne un mélange milieu complexe comprenant un liant hydraulique, en particulier du ciment, mêlé à des bulles de gaz, généralement de l'air.

L'expression «suffisamment humide » désigne un degré d'humidité suffisant pour empêcher la rétractation de la mousse lors de son hydratation (c'est à dire de la prise) et de son séchage. Ce taux d'humidité peut être généralement celui de blocs de béton à l'état frais au sortir du démoulage. Alternativement, dans le cas de blocs pris et /ou durcis, ce taux d'humidité peut être atteint par l'adjonction d'eau, notamment par trempage ou arrosage, jusqu'à saturation du bloc.

L'expression « matériau hydrofuge » désigne un matériau qui empêche le transfert d'une quantité d'eau de manière adéquate. Par exemple une hydrofugation suffisante est réalisée lorsqu'une goutte d'eau déposée à la surface du matériau présente un angle de contact supérieur à 90°.

Le bloc minéral à maçonner utilisé à l'étape a) du procédé de l'invention comprend au moins une alvéole ayant des parois présentant un taux d'absorption d'eau de moins de 5 g / (m².s) à 10 minutes, de préférence de moins de 4 g / (m².s) à 10 minutes, encore plus préférentiellement de moins de 3 g / (m².s) à 10 minutes. Généralement, le taux d'absorption d'eau est mesuré selon la norme NF EN 772-11 de août 2011.

Les parois de l'alvéole peuvent également dans certains cas présenter un taux d'absorption quasiment nul, ou proche de 0 g / (m².s) à 10 minutes. Dans ce cas, les parois sont soit saturées en eau et ne peuvent plus absorber d'eau soit elles sont imperméable à l'eau (par exemple par hydrofugation). Dans ces deux cas, il n'y a pas ou peu de transfert hydrique via la paroi.

Ainsi selon un premier mode de réalisation, le bloc minéral à maçonner mis en oeuvre à l'étape a) du procédé de l'invention peut être à l'état frais ou suffisamment humide. Ce bloc peut contenir une certaine quantité d'eau avant que la mousse minérale de ciment ne soit introduite dans les alvéoles. Selon ce mode de réalisation, le bloc minéral à maçonner peut être un bloc déjà formé et durci, et il sera suffisamment humide ou humidifié. Cette humidification peut être effectuée par adjonction d'eau à ce bloc, par exemple par trempage, arrosage ou vaporisation. Ce bloc à l'état frais ou suffisamment humide ou humidifié comprend au moins une alvéole ayant des parois présentant un taux d'absorption d'eau de moins de 5 g / (m².s) à 10 minutes, de préférence de moins de 4 g / (m².s) à 10 minutes, encore plus préférentiellement de moins de 3 g / (m².s) à 10 minutes. Généralement, le taux d'absorption d'eau est mesuré selon la norme NF EN 772-11 de août 2011.

Alternativement l'humidité peut provenir de l'absence de séchage lors de la fabrication du bloc. En effet, lorsque le bloc est obtenu à partir de la mise en forme d'une pâte aqueuse (par exemple à base d'argile (brique), de chaux ou du ciment Portland), la mousse minérale de ciment peut avantageusement être introduite dans les alvéoles avant que le bloc ne soit pris et/ou durci. Cette méthode de fabrication est très avantageuse puisqu'elle permet un gain de temps en combinant des étapes de durcissement et d'humidification ainsi qu'en évitant des étapes de manipulations supplémentaires des blocs. Ainsi le procédé selon l'invention peut avantageusement comprendre l'utilisation d'un bloc dont le béton est à l'état frais lors de l'étape b), en particulier un bloc de béton léger frais.

Le bloc minéral à maçonner utilisé à l'étape a) du procédé de l'invention est de préférence à l'état frais. Cela signifie que le matériau du bloc est à l'état frais, c'est-à-dire que le bloc ne soit ni pris et/ou ni durci. Le bloc à l'état frais est généralement un bloc juste formé ou moulé. Dans ce cas, le bloc est juste formé ou moulé et l'hydratation du ciment est en cours.

Pour certains types de blocs, la quantité d'eau contenu dans des blocs juste formés (blocs à l'état frais) est particulièrement adaptée à la présence de mousse minérale de ciment.

L'utilisation de blocs non durcis, c'est-à-dire frais formés ou en cours d'hydratation et/ou de durcissement est un aspect particulièrement innovant de l'invention. Selon cet aspect particulièrement préféré de l'invention, la texture désirée du béton est de type terre humide. Il est difficile de caractériser la rhéologie d'un tel matériau par un test simple. Seuls des aspects visuels et tactiles (formation d'une boule dans la main qui n'est pas totalement liée) permettent dans un premier temps d'évaluer la formulation de manière adéquate. La réalisation de l'essai permet en effet de vérifier la qualité de la formulation.

Ainsi selon un mode réalisation et un aspect particulièrement préféré de l'invention le procédé de fabrication comprend une étape de formation du bloc (par exemple une étape de moulage). Cette étape de formation du bloc est une variante de l'étape a) et elle peut être suivie soit immédiatement, soit dans un laps de temps court de l'étape b) de remplissage de l'alvéole ou des alvéoles du bloc. Il est préféré que ce laps de temps n'excède pas 60 minutes, de préférence 30 minutes et soit avantageusement de moins 10mn, par exemple d'environs 5mn.

De préférence, le laps de temps entre les étapes a) et b) du procédé selon l'invention n'excède pas 60 minutes, de préférence 30 minutes, et soit avantageusement de moins 10mn, par exemple d'environs 5mn.

Après l'étape b) du procédé selon l'invention, les blocs composites sont généralement stockés dans un local avec éventuellement une mise hors gel, cette étape s'appelle autocure. Ensuite ils sont mis en attente jusqu'à commercialisation.

En revanche, le procédé selon l'invention ne comprend pas d'étape de traitement thermique du bloc isolant composite, hormis l'autocure, ni de traitement hydrothermique, ni de traitement par autoclave avec ou sans mise sous pression, à aucun moment du procédé.

De préférence, le procédé de fabrication selon l'invention ne comprend pas d'étape de séchage ou d'étuvage du bloc avant les étapes a) ou b).

De préférence, le procédé de fabrication selon l'invention est un procédé en continu ou en semi continu.

Selon un second mode de réalisation, la paroi des alvéoles du bloc minéral à maçonner est recouverte d'un matériau hydrofuge qui, notamment en obturant des pores, ne permet peu ou pas les transferts aqueux.

Il est possible d'employer des composés hydrofuges de surface, employés comme enduits superficiels, ou des hydrofuges de masse, incorporés dans le béton lors de la confection du bloc.

Le composé hydrofuge pouvant être utilisé, seul ou en mélange, pour hydrofuger un béton ou un bloc est avantageusement choisi dans le groupe constitué par les composés suivants:
- Les dérivés du silicium tels que : les polyhydrogénométhyl siloxanes, les polydiméthyl siloxanes, les organosiliconates (comme le méthyl siliconate de potassium ou de sodium et en général les alkylsiliconates), les organosilanes (comme les octyl triméthoxysilane, octyl tréthoxysilane, les butyl triméthoxysilane, les butyl triéthoxysilane et les alcoxysilanes de chaine alkyl C1 à C12 linéaire ou ramifiée), les organosilanols, les alkyltrichlorosilanes et les silicones fluorés.
- Les dérivés fluorés tels que les polytrifluoroéthylènes, les polytetrafluoroéthylènes, et les dérivés des fluorocarbones.
- Les chaines grasses alkyles, naturelles ou synthétiques, telles que les paraffines linéaires ou ramifiées, y compris les polyéthylènes ou les polypropylènes.
- Les dérivés d'acides gras tels que les stéarates, oléates, palmitates, béhénates et les dérivés de la société Guerbet (comme par exemple les stéarates de calcium ou oléate de calcium).

Le composé hydrofuge peut donc être employé lors du gâchage du béton (ajouté dans la masse) ou en post traitement sur un bloc déjà formé, par imprégnation ou par application à l'aide d'un spray à la surface du bloc.

Le composé hydrofuge peut être sous forme de poudre ou sous forme liquide. Les formes liquides peuvent être homogènes ou être des émulsions ou des dispersions.

Certains de ses composés, comme les organosilanes sont hydrolysés en présence de ciment et d'eau en organosilanols qui polymérisent et se fixent de façon covalente avec les surfaces du béton et des granulats pour les rendre hydrophobes. Les polyhydrogénométhyl siloxanes sont également hydrolysés et polymérisent in situ. Les produits tels que les sels d'acides gras ou les polydiméthylsiloxanes ou les paraffines sont piégés dans la porosité. Ils empêchent les mouvements d'eau et rendent le substrat hydrophobe.

Un composé hydrofuge préféré est le CHRYSOFUGE® C, produit de la société Chryso. CHRYSOFUGE® C est un hydrofuge de masse concentré à base de stéarate de calcium, dont l'utilisation est recommandée pour des bétons dont le liant hydraulique comprend de la chaux. Il forme avec ce composé des micelles hydrophobes qui obstruent les capillaires du béton.

Ainsi le procédé selon l'invention peut avantageusement comprendre une étape d'application d'un composé hydrofuge sur les parois de l'alvéole du bloc, par exemple par trempage ou vaporisation, étape préliminaire à l'étape b) de remplissage.

De préférence, le bloc minéral à maçonner mis en oeuvre à l'étape a) du procédé selon l'invention peut comprendre un composé hydrofuge mélangé dans la masse du bloc.

Ainsi le procédé peut comprendre, lorsque le bloc est un bloc de béton léger, une étape d'obtention d'un bloc par mélange d'un liant hydraulique et de granulats et d'au moins un composé hydrofuge, ladite étape étant une étape préliminaire à l'étape b) de remplissage.

De préférence, le bloc minéral à maçonner mis en oeuvre à l'étape a) du procédé selon l'invention est un bloc de béton.

Le bloc utilisé dans le procédé selon l'invention est un bloc de béton ou de brique à base d'argile isolant composite, avantageusement de forme généralement parallélépipédique. Lorsqu'un composé hydrofuge est utilisé, le ciment peut également comprendre une certaine quantité de laitier, par exemple de 2 à 33% en masse de la masse total de ciment.

Les granulats peuvent être généralement des granulats choisis dans les groupes de granulats 0/4, 0/6 et 4/6,3 mm ou leurs mélanges.

Selon un aspect particulièrement préféré de l'invention, le bloc minéral à maçonner est un bloc de béton léger. Les granulats léger du béton léger du bloc peuvent être de la pierre ponce, et avantageusement un sable en pierre ponce de taille 0/6mm. Selon un aspect de l'invention, les granulats légers ne sont pas des billes de verres, ni des billes de verre expansé ou tout granulat à base de verre.

Les alvéoles sont généralement des alvéoles ou des creux de taille standard dans la fabrication de blocs de constructions.

Avantageusement, le bloc à maçonner selon l'invention peut être un bloc de béton, un bloc de béton léger, un bloc de béton cellulaire ou une brique.

Avantageusement, le bloc à maçonner selon l'invention peut être un bloc de béton.

Avantageusement, le bloc à maçonner selon l'invention peut être un bloc de béton léger.

De manière très avantageuse, l'alvéole présente dans le bloc mis en oeuvre dans le procédé selon l'invention est une alvéole traversante, c'est-à-dire une ouverture traversant le bloc de part en part.

La mousse minérale de ciment mise en oeuvre à l'étape b) du procédé selon l'invention est de préférence à l'état frais, cela signifie qu'elle ne soit ni prise et/ou ni durcie. La mousse minérale de ciment à l'état frais est généralement une mousse juste formée ou coulée, dans ce cas l'hydratation du ciment de la mousse est en cours.

De préférence, l'étape b) est une étape de remplissage d'une mousse minérale de ciment à l'état frais dans une alvéole d'un bloc à l'état frais ou suffisamment humide.

De préférence, la mousse minérale de ciment mise en oeuvre à l'étape b) est à l'état frais et le bloc minéral à maçonner mis en oeuvre à l'étape a) est à l'état frais.

La mousse minérale de ciment présente de préférence une densité inférieure à 600 kg/m³, préférentiellement inférieure à 500 kg/m³, plus préférentiellement inférieure à 400 kg/m³. De préférence, la mousse minérale présente une très faible conductivité thermique. Diminuer la conductivité thermique des matériaux de construction est hautement désirable puisqu'elle permet d'obtenir une économie d'énergie de chauffage ou climatisation dans les immeubles d'habitation ou de travail. La conductivité thermique (encore appelée lambda (λ)) est une grandeur physique caractérisant le comportement des matériaux lors du transfert de chaleur par conduction. La conductivité thermique représente la quantité de chaleur transférée par unité de surface et par une unité de temps sous un gradient de température. Dans le système international d'unités, la conductivité thermique est exprimée en watts par mètre kelvin (W·m-1·K-1). Les bétons classiques ou traditionnels ont une conductivité thermique entre 1,3 et 2,1 mesurée à 23°C et 50 % d'humidité relative. La mousse minérale mise en oeuvre à l'étape b) du procédé selon l'invention peut être choisie parmi les mousses ayant une conductivité thermique allant de 0,03 à 0,1 W/m.K, de préférence de 0,03 à 0,06 W/m.K et plus préférentiellement de 0,03 à 0,046 W/m.K.

Les mousses minérales réalisées à partir d'agents porogènes sont exclues du procédé selon l'invention.

Les mousses minérales qui s'expansent dans l'alvéole du bloc minéral à maçonner sont exclues du procédé selon l'invention.

Un objet de l'invention est également un bloc minéral isolant composite, et plus particulièrement un bloc à maçonner, obtenu par le procédé selon l'invention ainsi que son utilisation dans le domaine de la construction.

Un autre objet de l'invention est un bloc isolant composite comprenant un bloc, ledit bloc comprenant au moins une alvéole ayant des parois éventuellement constituées d'un matériau substantiellement hydrofuge, ladite alvéole étant remplie d'une mousse minérale ne comprenant pas de ciment d'aluminate de calcium.

De préférence ladite mousse ne comprend pas de ciment à prise rapide. Selon un aspect particulièrement avantageux de l'invention la mousse minérale durcie est stable, c'est-à-dire qu'elle ne s'effondre pas et ne se détache pas des parois. Le bloc et la mousse minérale peuvent être tels que décrit précédemment en référence avec le procédé de l'invention.

Un autre objet de l'invention est l'utilisation un bloc minéral isolant composite tel que décrit ci-dessus ou obtenu selon le procédé décrit ci-dessus pour la construction et plus particulièrement la maçonnerie.

L'invention sera mieux comprise à la lecture des exemples et des figures annexées, qui ne présentent aucun caractère limitatif, dans lesquelles :
La figure 1 représente des blocs de bétons remplis d'une mousse de ciment selon l'invention ;
La figure 2 représente une partie d'un bloc de béton de la figure 1 après séchage ; et
La figure 3 est un exemple comparatif d'un bloc de béton lorsque le procédé selon l'invention n'est pas mis en pratique.

### EXEMPLES

### Formation de blocs de béton à alvéoles.

### Un béton standard a été obtenu en utilisant la formule F33 suivante :

### Liants hydrauliques :

- 4,952 Kg de ciment de type CEM I, ou ciment de type Portland, comprenant plus de 95% de clinker (conformément à la norme NF EN 197-1) vendu par Lafarge sous la marque Ciment 52.5R.
- 2,476 Kg d'un matériau calcaire à base de chaux (laitier) vendu sous la dénomination commerciale BL200 par la société Orgon de la société Omya.

### Granulats :

- 24,514 Kg de sable de la carrière de la Petite Craz de granulométrie 0/4 mm concassé (en accords avec la norme BS EN 13139) vendu par Lafarge granulats sous la dénomination commerciale 0 /4C.
- 29,962 Kg de gravillons de la carrière de la Petite Craz de granulométrie 4/6.3 mm concassé (en accords avec la norme BS EN 13139) vendu par Lafarge granulats sous la dénomination commerciale 4/6.3C.

La quantité d'eau de prémouillage est de 2,179 kg et la quantité d'eau de gâchage est de 0,916 kg.

### Un béton hydrofugé a été obtenu en utilisant la formule F 34 suivante :

### Liants hydrauliques :

- 4,943 Kg de ciment de type CEM I, ou ciment de type Portland, comprenant plus de 95% de clinker (conformément à la norme NF EN 197-1) vendu par Lafarge sous la marque Ciment 52.5R.
- 2,471 Kg de d'un matériau calcaire à base de chaux (laitier) vendu sous la dénomination commerciale BL200 par la société Orgon de la société Omya.

### Granulats :

- 24,468 Kg de sable de la carrière de la Petite Craz de granulométrie 0/4 mm (en accords avec la norme BS EN 13139) vendu par Lafarge granulats sous la dénomination commerciale 0/4C.
- 29,905 Kg de gravillons de la carrière de la Petite Craz de granulométrie 4/6.3 mm (en accords avec la norme BS EN 13139) vendu par Lafarge granulats sous la dénomination commerciale 4/6.3C.
- 0,099 kg d'agent hydrofugeant CHRYSOFUGE® C provenant de la société Chryso.

La quantité d'eau de pré mouillage est de 2,175 kg et la quantité d'eau de gâchage est de 1.038 kg.

### Un béton léger standard est obtenu en utilisant la formule F41 suivante :

### Liants hydrauliques :

- 4,943 Kg de ciment de type CEM I, ou ciment de type Portland, comprenant plus de 95% de clinker (conformément à la norme NF EN 197-1) vendu par Lafarge sous la marque Ciment 52.5R.

### Granulats :

- 39,377 Kg de sable de pierre ponce de granulométrie 0/6 mm vendu par Lafarge granulats sous la dénomination commerciale Ponce de lava GR3554.
- La quantité d'eau de gâchage est de 2,701 kg.

### Obtention du béton

Le procédé d'obtention du béton dans les exemples ci-dessous a été effectué selon un protocole standard qui est le suivant :
- Introduction des granulats dans le malaxeur.
- Homogénéisation pendant 30s.
- Introduction en 30s de l'eau de prémouillage (4% de la masse des granulats).
- Malaxage pendant 1 min.
- Repos pendant 4 min (temps nécessaire pour atteindre l'équilibre d'absorption des granulats).
- Introduction des liants.
- Malaxage pendant 1min.
- Introduction de l'eau de gâchage en 30s.
- Malaxage pendant 1 min30s.
- Prélèvement.

L'homogénéisation et le malaxage ont été effectué par un malaxeur standard dont les caractéristiques techniques sont les suivantes : malaxeur à axe vertical avec pâles excentrées et cuve tournante de marque Zylos.

Pour le béton léger, le procédé d'obtention dans l'exemple ci-dessous a été effectué selon un protocole standard qui est le suivant :
- Introduction des granulats et des liants dans un malaxeur
- Malaxage pendant 1min.
- Introduction de l'eau de gâchage en 30s.
- Malaxage pendant 1 min30s.
- Prélèvement.

### Formation des blocs

Une fois le béton obtenu, des blocs comprenant deux alvéoles ont été confectionnés en coulant le béton dans des moules et en procédant à leurs compaction par utilisation de presses fixes vibrantes (vibro-compaction) selon des méthodes connues et usuelles. Pour confectionner les blocs (planche de 4 blocs de 15X20X40 cm) la quantité de matières mise en oeuvre a été de 15,6 Kg afin d'obtenir des blocs d'environ 14Kg.

### Production et de mise en oeuvre de la mousse minérale selon la méthode décrite dans le document WO2013/150148A1

Le coulis de ciment a été produit avec un malaxeur de type Rayneri. Le protocole de malaxage a été le suivant. La mousse minérale a été produite à partir du mélange d'un coulis de ciment et d'une mousse aqueuse, lesquels ont été homogénéisé en continue dans un mélangeur statique. Cette mousse minérale peut-être du même type que celles décrites aux pages 23 à 26 de la demande de brevet publiée sous le numéro WO2013/150148A1 au nom du déposant (mousses minérales 6 à 8).

En résumé un « coulis de ciment » a été obtenu en utilisant un composé solide, ou prémix, comprenant un ou plusieurs liants hydrauliques, (par exemple ciment de Portland et/ou laitiers) à hauteur de 50% en masse du mélange sec. De l'eau a alors été mélangée au prémix de manière à obtenir un coulis de ciment dans des proportions aux alentours de 20% ± 5% en masse.

| **Temps** | **Vitesse** | **Actions** |
|---|---|---|
| 0 à 10" | Lente | Mélange des liants à sec |
| 10" à 1'00 | Lente | Ajout de la solution jusqu'à la formation des quenelles |
| 1'00 à 2'00 | Rapide | Mélange des quenelles |
| 2'00 à 3'00 | Lente | Ajout du reste de la solution |
| 3' à 5'30" | Semi rapide | Malaxage |

Un malaxeur Rayneri Turbotest Mixer (MEXP-101) comprenant des pales défloculeuses et dont la vitesse varie de 1000 rpm à 400 rpm selon le volume de coulis a été utilisé pour maintenir le coulis en agitation continue dans la cuve de stockage après sa fabrication et avant son pompage pour être injecté dans le mélangeur statique.

Le coulis peut être pompé grâce à une pompe volumétrique de type Moineau, par exemple une : pompe à vis excentrée Seepex™ BN025-12 - *W* de commission 244921.

La mousse aqueuse a été obtenue par moussage d'une solution d'eau et d'un agent moussant tel que le Proprump 26 produite par la société Propump. Le Propump 26 est une protéine animale de poids moléculaire d'environs 6000 Daltons. La quantité d'eau peut varier de 75 à 98% en masse, par exemple aux environs de 80%.

D'autres additifs tels qu'un agent épaississant (par exemple le biopolymère Kelcocrete 200), ou un accélérateur comme du chlorure de calcium peut être ajoutés mais ne sont généralement pas requis.

La solution aqueuse d'agent moussant a été co-introduite à travers le mousseur avec l'air sous pression (plage allant de 1 à 6 bars) à l'aide d'une jonction en T. La mousse aqueuse a été générée de façon continue. Le mousseur est constitué d'un lit de billes de verre de type SB30 de diamètre compris entre 0,8 et 1,4 mm, entassées selon un tube de longueur 100 mm et de diamètre 12 mm.

Le coulis de ciment a été mis en contact avec la mousse aqueuse déjà mise en circulation dans le circuit et le coulis de ciment moussé a alors été obtenu.

Le remplissage des alvéoles du bloc de béton par le coulis moussé a été réalisé en continu par un tuyau qui est manipulé d'une alvéole à l'autre. Bien que dans cet exemple la mise en oeuvre ait été manuelle, la mise en oeuvre peut-être automatisée, en particulier du fait que le coulis de ciment ne contient pas d'accélérateur de prise tel que l'aluminate de calcium.

### Exemple 1 : remplissage d'un bloc minéral à maçonner à l'état frais.

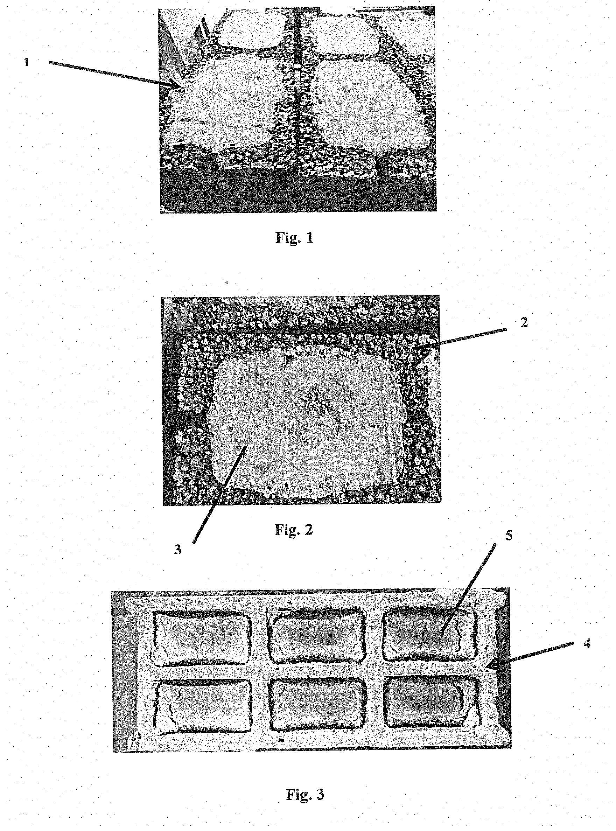

Selon une première variante de l'invention, les alvéoles de blocs de ciment (2) réalisés selon la méthode décrite ci-dessus avec le béton de Formule F33 ont été remplies d'une mousse de ciment (3) dès la sortie de la presse (vibro compacteur) et le démoulage dudit bloc (2). Les parois de l'alvéole du bloc étaient saturés en eau (la valeur d'absorptions d'eau théorique d'après norme NF-EN 772-11 serait proche de zéro à 10min en g/(m².s) si la cohésion du bloc permettait de réaliser la mesure). Après remplissage par la mousse de ciment, les blocs minéraux isolants composites (1) ont été placés sous un couvercle de Styrodur et laissés sur place dans la salle pendant 24 heures. L'aspect extérieur de ces blocs minéraux isolants composites (1) est représenté aux figures 1 et 2.

Ce procédé a été répété avec un bloc de ciment léger de Formule F 41.

### Exemple 2 : remplissage d'un bloc minéral à maçonner hydrofugé.

Selon une seconde variante de l'invention, des blocs de ciment réalisés selon la méthode décrite ci-dessus avec le béton de Formule F34 (blocs hydrofugés) ont été placés sous un couvercle en Styrodur afin de reproduire les conditions de cure observées généralement dans les usines de production de blocs à maçonner. La température est proche de 30°C et l'humidité proche de la saturation. Une fois la prise et la cure effectuées (au moins 24 heures), les alvéoles de ces blocs, dont les parois présentaient une absorption d'eau d'après norme NF-EN 772-11) de 0,6 g/(m².s) à 10min, ont été remplies de mousse minérale de ciment. Ces blocs minéraux isolants composites ont été placés sous un couvercle de Styrodur et laissés sur place dans la salle pendant 24 heures.

### Exemple 3 : remplissage d'un bloc minéral à maçonner à l'état sec réhydraté.

Selon une troisième variante de l'invention, des blocs de ciment réalisés selon la méthode décrite ci-dessus avec le béton de Formule F33 (blocs non hydrofugés) ont été placés sous un couvercle en Styrodur pendant 48 heures afin de reproduire les conditions de cure et de prise observées généralement dans les usines de production de blocs à maçonner. La température était proche de 30°C et l'humidité proche de la saturation.

Une fois la prise et la cure effectuées, le bloc a été ré-humidifié par aspersion à grande eau pendant 20 secondes. L'absorption d'eau d'après norme NF-EN 772-11) des parois des alvéoles du bloc était de 2 g/(m².s) à 10min.

Les alvéoles de ces blocs ont été alors remplies de mousse de ciment. Ces blocs composites ont été placés sous un couvercle de Styrodur et laissés sur place dans la salle pendant 24 heures.

### Exemple 4 : Exemple comparatif : remplissage d'un bloc de ciment du commerce.

Un parpaing en ciment standard provenant de la société Fabemi a été rempli d'une mousse de ciment (5). L'aspect extérieur de ce bloc composite (4) après séchage est représenté en Figure 3. L'absorption d'eau d'après norme NF-EN 772-11) des parois des alvéoles du bloc était de 6 g/(m².s) à 10min.

### Conclusion

La mousse de ciment des blocs composites obtenus selon la méthode de l'invention et décrits ci-dessus est restée stable après séchage. Non seulement la mousse est restée solidaire des parois d'un point vue visuelle et aucune rétractation n'était apparente, mais lesdits blocs ont été retournés de manière à s'assurer que les mousses adhéraient bien aux parois. Les mousses ne se sont pas détachées.

La mousse de ciment introduite dans les alvéoles d'un bloc de ciment standard (exemple comparatif 4) s'est rétractée et détachée des parois des alvéoles.

### Exemple 5 : Exemple: remplissage d'un bloc minéral à maçonner de béton du commerce.

Des blocs de béton standard (parpaing provenant de la société Fabemi) ont été rempli d'une mousse de ciment. En effet, trois blocs ont été immergés dans l'eau pendant 24 heures puis égouttés pendant soit 2 heures, 24 heures ou 30 minutes. Un bloc n'a pas été immergé (bloc comparatif). L'absorption d'eau d'après norme NF-EN 772-11 des parois des alvéoles des blocs étaient variables comme indiqué dans le tableau 1. Ensuite ils ont été remplis de mouse de ciment. L'état de la mousse est décrit dans le tableau 1 ci-dessous.

**Tableau 1**

| | Absorption d'eau à 10 min en g/(m².s) | adhésion mousse bloc | affaissement mousse | fissuration mousse |
|---|---|---|---|---|
| Sans immersion (exemple comparatif) | 5,9 | mauvaise | 1,5 cm | moyenne |
| Egoutté 24h | 4,1 | moyenne | 0,5 cm | non |
| Egoutté 2h | 2,1 | bonne | 0,4 cm | non |
| Egoutté 30min | 1,3 | bonne | 0,3 cm | non |

### Exemple 6 : Exemple: remplissage d'un bloc minéral à maçonner de béton léger du commerce.

Des blocs de béton léger à base de granulats de pierre ponce (vendu sous le nom Fabtherm et provenant de la société Fabemi) ont été rempli d'une mousse de ciment (5). En effet, trois blocs ont été immergés dans l'eau pendant 24 heures puis égouttés pendant soit 2 heures, 24 heures ou 30 minutes. Un bloc n'a pas été immergé (bloc comparatif). L'absorption d'eau d'après norme NF-EN 772-11 des parois des alvéoles des blocs étaient variables comme indiqué dans le tableau 2. Ensuite ils ont été remplis de mouse de ciment. L'état de la mousse est décrit dans le tableau 2 ci-dessous.

| | Absorption d'eau à 10 min en g/(m².s) | adhésion mousse bloc | affaissement mousse | fissuration mousse |
|---|---|---|---|---|
| Sans immersion (exemple comparatif) | 11,8 | mauvaise | 1,1 cm | importante |
| Egoutté 24h | 4,9 | moyenne | 0,3 cm | non |
| Egoutté 2h | 2,5 | bonne | 0,1 cm | non |
| Egoutté 30min | 1,8 | bonne | 0,1 cm | non |

L'invention n'est pas limitée aux modes de réalisations présentés et d'autres modes de réalisation apparaîtront clairement à l'homme du métier. Il est notamment possible d'accélérer la prise des blocs composites une fois la mousse de ciment introduite dans les alvéoles par des méthodes connues telle que le chauffage.

## Revendications

1. Procédé de fabrication d'un bloc de béton ou de brique à base d'argile isolant composite comprenant les étapes suivantes :
a) disposer d'un bloc de béton ou de brique à base d'argile à maçonner comprenant au moins une alvéole ayant des parois présentant un taux d'absorption d'eau de moins de 5 g / (m².s) à 10 minutes, et
b) remplir ladite alvéole d'une mousse minérale de ciment dont la teneur en alumine du ciment utilisé pour réaliser la mousse est inférieure à 20% en masse du composé sec.

2. Procédé selon la revendication 1, **caractérisé en ce que** le bloc mis en oeuvre à l'état a) est à l'état frais.

3. Procédé selon la revendication 1, **caractérisé en ce que** le bloc mis en oeuvre à l'état a) est un bloc déjà durci et suffisamment humidifié par adjonction d'eau à ce bloc déjà durci de sorte à ce que le bloc comprenne au moins une alvéole ayant des parois présentant un taux d'absorption d'eau de moins de 5 g / (m².s) à 10 minutes mesuré selon la norme NF EN 772-11 de août 2011.

4. Procédé selon l'une quelconque des revendications 1 à 3, **caractérisé en ce que** la mousse minérale de ciment ne comprend pas de ciment à prise rapide.

5. Procédé selon l'une quelconque des revendications 1 à 4, **caractérisé en ce que** la mousse minérale de ciment présente une densité inférieure à 600 kg/m³.

6. Procédé selon l'une quelconque des revendications 1 à 5 **caractérisé en ce que** la mousse minérale de ciment mise en oeuvre à l'étape b) présente une conductivité thermique allant de 0,03 à 0,06 W/m.K.

7. Procédé selon l'une quelconque des revendications 1 à 6, **caractérisé en ce que** ladite alvéole soit une alvéole traversante.

8. Procédé selon l'une quelconque des revendications 1 à 6, **caractérisé en ce que** le bloc est un bloc de béton.

9. Procédé selon l'une quelconque des revendications 1 à 8 **caractérisé en ce que** le laps de temps entre les étapes a) et b) n'excède pas 60 minutes, de préférence 30 minutes.

10. Procédé selon l'une quelconque des revendications 1 à 9, **caractérisé en ce qu'**il comprend une étape d'application d'un composé hydrofuge sur les parois de l'alvéole du bloc, étape préliminaire à l'étape b) de remplissage.

11. Procédé selon l'une quelconque des revendications 1 à 10, **caractérisé en ce que** le bloc mis en oeuvre à l'étape a) comprend un composé hydrofuge mélangé dans la masse du bloc.

12. Procédé selon l'une quelconque des revendications 1 à 11 **caractérisé en ce qu'**il ne comprend pas d'étape de séchage ou d'étuvage du bloc avant les étapes a) ou b).

13. Procédé selon l'une quelconque des revendications 1 à 12 caractérisé en qu'il s'agit d'un procédé en continu ou en semi continu.

14. Bloc de béton ou de brique à base d'argile isolant composite obtenu par le procédé selon l'une quelconques des revendications précédentes.

15. Utilisation d'un bloc de béton ou de brique à base d'argile isolant composite selon la revendication 14, ou obtenu selon le procédé décrit à l'une quelconque des revendications 1 à 13, pour la construction, et plus particulièrement la maçonnerie.

## Patentansprüche

1. Verfahren zur Herstellung eines isolierenden Verbundbeton- oder Ziegelbausteins auf Lehmbasis, die folgenden Schritte umfassend:
a) Anordnen eines zu mauernden Beton- oder Ziegelbausteins auf Lehmbasis, mindestens eine Zelle umfassend, die Wände aufweist, die eine Wasserabsorptionsrate von mindestens 5g/(m².s) in 10 Minuten vorweist, und
b) Füllen der Zelle mit einem mineralischen Zementschaum, wobei der Aluminiumoxidgehalt des zur Fertigung des Schaums verwendeten Zements geringer als 20 Gew.-% der trockenen Verbindung ist.

2. Verfahren nach Anspruch 1, **dadurch gekennzeichnet, dass** der im Schritt a) angewandte Baustein im frischen Zustand ist.

3. Verfahren nach Anspruch 1, **dadurch gekennzeichnet, dass** der im Schritt a) angewandte Baustein ein bereits ausgehärteter und durch Beigabe von Wasser zu diesem bereits ausgehärteten Baustein ausreichend befeuchteter Baustein ist, sodass der Baustein mindesten eine Zelle umfasst, die Wände aufweist, die eine Wasserabsorptionsrate von mindestens 5g/(m².s) in 10 Minuten vorweisen, die gemäß der Norm NF EN 772-11 aus August 2011 gemessen wird.

4. Verfahren nach einem der Ansprüche 1 bis 3, **dadurch gekennzeichnet, dass** der mineralische Zementschaum keinen Schnellbindezement umfasst.

5. Verfahren nach einem der Ansprüche 1 bis 4, **dadurch gekennzeichnet, dass** der mineralische Zementschaum eine Dichte von weniger als 600 kg/m³ vorweist.

6. Verfahren nach einem der Ansprüche 1 bis 5, **dadurch gekennzeichnet, dass** der im Schritt b) angewandte mineralische Zementschaum eine Wärmeleitfähigkeit vorweist, die von 0,03 bis 0,06 W/m.K reicht.

7. Verfahren nach einem der Ansprüche 1 bis 6, **dadurch gekennzeichnet, dass** die Zelle eine durchlaufende Zelle ist.

8. Verfahren nach einem der Ansprüche 1 bis 6, **dadurch gekennzeichnet, dass** der Baustein ein Betonbaustein ist.

9. Verfahren nach einem der Ansprüche 1 bis 8, **dadurch gekennzeichnet, dass** die Zeitspanne zwischen den Schritten a) und b) 60 Minuten, vorzugsweise 30 Minuten, nicht überschreitet.

10. Verfahren nach einem der Ansprüche 1 bis 9, **dadurch gekennzeichnet, dass** es einen Schritt des Auftragens einer wasserabweisenden Verbindung an den Wänden der Zelle des Bausteins, Vorläuferschritt zum Schritt b) des Füllens, umfasst.

11. Verfahren nach einem der Ansprüche 1 bis 10, **dadurch gekennzeichnet, dass** im Schritt a) angewandte Baustein eine wasserabweisende Verbindung umfasst, die in die Masse des Bausteins gemischt ist.

12. Verfahren nach einem der Ansprüche 1 bis 11, **dadurch gekennzeichnet, dass** es keinen Trocknungs- oder Temperschritt des Bausteins vor den Schritten a) oder b) umfasst.

13. Verfahren nach einem der Ansprüche 1 bis 12, **dadurch gekennzeichnet, dass** es sich um ein kontinuierliches oder halbkontinuierliches Verfahren handelt.

14. Isolierender Verbundbeton- oder Ziegelbaustein auf Lehmbasis, der durch das Verfahren nach einem der vorstehenden Ansprüche erhalten wird.

15. Verwendung eines isolierenden Verbundbeton- oder Ziegelbausteins auf Lehmbasis nach Anspruch 14, oder gemäß dem Verfahren erhalten, das in einem der Ansprüche 1 bis 13 beschrieben ist, zum Bauen und insbesondere zum Mauern.

## Claims

1. A method for producing a composite insulating clay brick or concrete block, comprising the following steps:
a) providing a clay masonry brick or concrete block comprising at least one cell with walls having a water absorption rate of less than 5 g / (m².s) at 10 minutes, and
b) filling said cell with a mineral cement foam, wherein the cement used to produce said mineral cement foam has an aluminium oxide content of less than 20% by weight of the dry compound.

2. The method according to claim 1, **characterised in that** the block used at step a) is in a fresh state.

3. The method according to claim 1, **characterised in that** the block used at step a) is an already hardened block and sufficiently wet by adding water to this already hardened block in such a way that the block comprises at least one cell having walls that have a water absorption rate of less than 5 g / (m².s) at 10 minutes measured according to standard NF EN 772-11 of August 2011.

4. The method according to any of claims 1 to 3, **characterised in that** the mineral cement foam does not comprise any quick-setting cement.

5. The method according to any of claims 1 to 4, **characterised in that** the mineral cement foam has a density of less than 600 kg/m³.

6. The method according to any of claims 1 to 5 **characterised in that** the mineral cement foam used at step b) has thermal conductivity ranging from 0.03 to 0.06 W/m.K.

7. The method according to any of claims 1 to 6, **characterised in that** said cell is a through cell.

8. The method according to any of claims 1 to 6, **characterised in that** the block is a concrete block.

9. The method according to any of claims 1 to 8 **characterised in that** a time lapse between steps a) and b) does not exceed 60 minutes, preferably 30 minutes.

10. The method according to any of claims 1 to 9, **characterised in that** it comprises a step of applying a water repellent compound to the cell walls of the block, a preliminary step before filling step b).

11. The method according to any of claims 1 to 10, **characterised in that** the block used at step a) comprises a water repellent compound mixed in the bulk of the block.

12. The method according to any of claims 1 to 11 **characterised in that** it does not comprise a drying or oven baking step of the block before steps a) or b).

13. The method according to any of claims 1 to 12 **characterised in that** it is a continuous or semi-continuous method.

14. A composite insulating clay or brick concrete block obtained by the method according to any of the preceding claims.

15. The use of a composite insulating clay or brick concrete block according to claim 14, or obtained according to the method described in any of claims 1 to 13, for construction, and more particularly masonry.
